# EUROPEAN PATENT APPLICATION

(11) **EP 4 708 807 A1**
(43) Date of publication of application: **11.03.2026**
(21) Application number: 24799875.0
(22) Date of filing: 25.04.2024
(51) Int. Cl.: H04L 51/063

(54) **INFORMATION PROCESSING METHOD AND APPARATUS, ELECTRONIC DEVICE AND STORAGE MEDIUM**

(30) Priority: 04.05.2023 CN 202310492521
(71) Applicant: Beijing Zitiao Network Technology Co., Ltd., Beijing 100190 (CN)
(72) Inventor: YU, Yajie, Beijing 100028 (CN)
(74) Representative: Isarpatent
(86) International application number: PCT/CN2024/089768
(87) International publication number: WO 2024/227417

(57) **Abstract**

The present disclosure relates to an information processing method and apparatus, an electronic device and a storage medium. The method comprises: acquiring a display interface of a target multimedia; and receiving a target operation of a user on the display interface, and generating target comment information in a comment area of the target multimedia, the target comment information comprising multimedia content set information and a jump link of a multimedia content set.

## Description

### CROSS-REFERENCE TO RELATED APPLICATIONS

The present application claims priority to and is based on a Chinese application with an application number 202310492521.2 and a filing date of May 4, 2023, the aforementioned application is hereby incorporated by reference in its entirety.

### TECHNICAL FIELD

The present disclosure relates to the field of computer technology, and in particular to information processing method, apparatus, electronic device and storage medium.

### BACKGROUND

With continuous development of the Internet and terminals, more and more users can obtain their favorite songs through terminals and add them to their playlists. Currently, if users want to share their own playlists, they usually need to guide other users to enter their playlist main page through text, which makes song sharing inefficient.

### SUMMARY

The present disclosure provides an information processing method, apparatus, electronic device and storage medium.

According to one aspect of the present disclosure, there is provided an information processing method, the method including:
acquiring a display interface of a target multimedia; and
receiving a target operation of a user on the display interface, and generating target comment information in a comment area for the target multimedia, wherein the target comment information includes information about a multimedia content set and a jump link to the multimedia content set.

According to another aspect of the present disclosure, there is provided an information processing apparatus, the apparatus including:
a first interface display module, configured to acquire a display interface of a target multimedia; and
a comment information generation module, configured to receive a target operation of a user on the display interface, and generate target comment information in a comment area for the target multimedia, wherein the target comment information includes information about a multimedia content set and a jump link to the multimedia content set.

According to a third aspect of the present disclosure, there is provided an electronic device, the electronic device including: a memory and a processor, wherein the memory stores a computer program, and the processor, when executing the computer program, can implement the method as mentioned above.

According to a fourth aspect of the present disclosure, there is provided a computer readable storage medium storing a computer program thereon, which, when executed by a processor, causes implementation of the method according to the present disclosure as mentioned above.

According to a fifth aspect of the present disclosure, there is provided a computer program product, comprising instructions and/or computer programs, which, when executed by a processor, causes implementation of the method according to the present disclosure as mentioned above.

According to a sixth aspect of the present disclosure, there is provided a computer program, comprising program codes, which, when executed by a processor, cause implementation of the method according to the present disclosure as mentioned above.

### BRIEF DESCRIPTION OF THE DRAWINGS

Further details, features and advantages of the present disclosure will be disclosed in the following description of exemplary embodiments in conjunction with the accompanying drawings, in which:
FIG. 1 is a comment information display page provided by an exemplary embodiment of the present disclosure;
FIG. 2 is a playlist display page provided by an exemplary embodiment of the present disclosure;
FIG. 3 is a flow chart of an information processing method provided by an exemplary embodiment of the present disclosure;
FIG. 4 is a schematic block diagram of functional modules of an information processing apparatus provided by an exemplary embodiment of the present disclosure;
FIG. 5 is a structural block diagram of an electronic device provided by an exemplary embodiment of the present disclosure;
FIG. 6 is a structural block diagram of a computer system provided by an exemplary embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as being limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on"; the term "one embodiment" means "at least one embodiment"; the term "another embodiment" means "at least one other embodiment"; the term "some embodiments" means "at least some embodiments". Related definitions of other terms will be given in the following description. It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a" and "a plurality" mentioned in the present disclosure are schematic rather than limiting, and those skilled in the art should understand that unless the context clearly indicates otherwise, they should be understood as "one or more".

Names of messages or information exchanged among multiple devices in the embodiments of the present disclosure are only used for illustrative purposes, and are not used to limit the scope of these messages or information.

It may be understood that before using the technical solutions disclosed in the embodiments of the present disclosure, a user should be informed of the type, range of usage, usage scenario, etc. of personal information involved in the present disclosure in an appropriate manner in accordance with relevant laws and regulations, and the authorization of the user should be obtained.

For example, in response to receiving an active request from a user, prompt information is sent to the user to clearly inform the user that the operation requested to be performed will require access to and usage of the user's personal information. In this way, the user may independently choose whether to provide the personal information to software or hardware such as an electronic device, an application, a server, or a storage medium that performs the operation of the technical solution of the present disclosure according to the prompt information.

As an alternative but non-limiting implementation, in response to receiving an active request from the user, the prompt information may be sent to the user in the form of a pop-up window, for example, and the prompt information may be presented in text in the pop-up window. In addition, the pop-up window may further include a selection control for the user to choose whether to "agree" or "disagree" to provide the personal information to the electronic device.

It may be understood that the above process of notifying and acquiring the authorization from the user is merely illustrative and is not intended to limit the implementations of the present disclosure. Other manners that satisfy the requirements of relevant laws and regulations may also be applied to the implementations of the present disclosure.

With continuous development of the Internet and terminals, more and more users can watch or listen to multimedia files through terminals, for example, the multimedia files may be songs. During the process of listening to a song, if the user likes the song, the user can add the song to his/her favorite playlist through the terminal.

In the related art, if a user wants to share songs in his/her own playlist with other users, the user needs to guide other users to his/her personal homepage through text, which results in low efficiency in sharing the songs in the playlist, that is, there is a technical problem of low efficiency in sharing multimedia files in the related art.

Therefore, in order to solve the above technical problems, in embodiments provided by the present disclosure, users can search for their favorite songs through a music playback software or a short video playback software, when users find their favorite songs, they can view comment information posted by other users in a comment area corresponding to the song, users can further judge whether the song is their favorite song based on the comment information, and can further learn about the song through the comment information posted by other users, so that users can get better experiences when listening to or watching the song.

When a user finds that a song is his/her favorite song through playbacking the song or in conjunction with other users' comments on the song, the user can add the song to his/her playlist through options such as song addition on the song page. In an embodiment, a playlist may include a list of songs added by a user, and the list includes information about each song in the playlist.

In an embodiment, in order to improve the efficiency of sharing user's playlist, the user can enter his/her own playlist information in the comment area for the song, such as the name of the playlist and the address of the playlist, etc., so that the playlist information can be published as a comment information. Since the comment information carries the address of the playlist, other users can automatically jump to the playlist display page when clicking on the comment information, allowing the user to easily share his/her own playlist in the comment area.

In an embodiment, when a user likes a song, shares a song, or views a song shared by other users, comment information may be generated in the comment area for the corresponding song, the comment information may be automatically generated by the system, or may be obtained by the user editing and then posting input information in the comment area for the song. For example, if a user likes a song, a comment information may be generated in the comment area for the song, and the comment information may include user information of the user, like behavior descriptive information, and playlist information carrying a playlist jump link. For example, the comment information may be "User X has liked the song, welcome to view his/her playlist ××" and the like. When a user shares a song or views the sharing of the song, he/she can also post a piece of comment information in the comment area for the song to share his/her own playlist through the comment information, other users can automatically jump to the display page of the user's own playlist by clicking on the comment information. For example, when a user shares a song, the comment information generated may be "User X has shared this song, welcome to view his/her playlist ××".

In an embodiment provided by the present disclosure, when a user adds a song to his/her playlist, a piece of comment information may be generated in the comment area for the song. The comment information can be used to describe that the user has added the song to the playlist, in an embodiment, the comment information may include one or a combination of user ID (Identity document), user character, playlist information, and descriptive information of the adding behavior, the playlist information may include the playlist name and/or descriptive information of the song adding behavior.

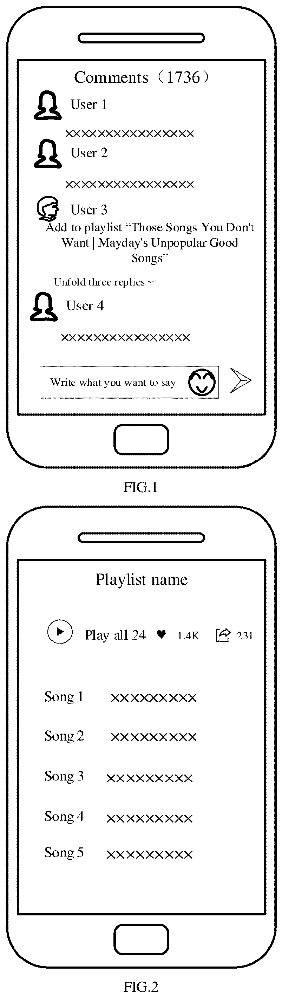

In an embodiment, when a user adds the song to his/her own playlist, a piece of comment information generated in the comment area for the song can be represented by target comment information. Exemplarily, as shown in FIG. 1 , the target comment information may be "Add to playlist "Those Songs You Don't Want | Mayday's Unpopular Good Songs"" in FIG. 1, where "Add to playlist" is equivalent to song adding behavior descriptive information, "Those Songs You Don't Want | Mayday's Unpopular Good Songs" is the playlist name, the playlist address information or jump link may be attached to the playlist name, and a display page of the playlist can be entered by the user through clicking, and the display page of the playlist may be homepage or details page of the playlist, etc. The target comment information in FIG. 1 also displays the user ID, for example, the ID indicates User 3, and can also display a release time of the target comment information, for example, "Just Now". In addition, in an embodiment, the user or other users also reply to the target comment information, "Unfold 3 Replies" in FIG. 1 is reply information of the user or other users to the target comment information, in FIG. 1, these 3 replies are folded, when the user or other users perform clicking operation, the 3 replies will be unfolded and displayed on the display interface.

In an embodiment provided by the present disclosure, when the user adds the above-mentioned song to his/her playlist, the target comment information is generated in the comment area for the song, in the embodiment, the song can be represented by a target song. In the embodiment, the target comment information may be automatically generated, and the target comment information may also be generated according to user input information in a personalized manner.

In an embodiment, when a user adds a target song to his/her playlist, the target comment information can be automatically generated in the comment area for the target song. In the process of automatically generating the target comment information, its trigger condition may be that when the user adds a target song to a playlist, the target comment information can be automatically generated in the comment area of the target song. Specifically, a comment information format template can be generated in advance as a preset comment information format template. The template can be obtained by combination of adding action information, playlist information and user information, and the format content of the template can be increased or decreased according to actual needs.

The preset comment information format template may have a specific format, which can be further adaptively adjusted according to the user's operation or needs. In an embodiment, the template may be further provided with a specific type, such as a font shape or color of text, or the like. For example, when the preset comment information format template includes: adding action information + playlist information + user information, the user ID, playlist information and song adding behavior descriptive information can be obtained, as shown in FIG. 1. In addition, the target comment information in the embodiment may also include song information, such as the song name, etc..

In an embodiment, when a user adds a target song to his/her own playlist, the target comment information can also be generated in a comment area for the target song according to the user's input information in a personalized manner. Specifically, based on the automatically displayed preset comment information format template, the user may directly edit the preset comment information format template, or perform editing based on the automatically generated target comment information, or the user may directly input relevant information in a comment information input window in the comment area to post a comment directly. As shown in FIG. 1, a bottom window in FIG. 1 is a window for the user inputting information to post comments.

In the process of generating the target comment information in the comment area for the target song according to the user's input information in a personalized manner, based on the user's input information, the input information can be combined with the user information and the playlist information as the target comment information to be published in the target comment area. It should be noted that after having been published, the target comment information can be pinned to the top of the comment area before the next cold start, so as to facilitate user viewing. For example, after having been published, before the user logs in next time, the target comment information can be pinned to the top of the display page in the user's comment area so as to avoid a situation where, after the target comment has been published, since there are too many comments in the comment area, the target comment information is displayed at the end of all the comment information when the comment information in the comment area is displayed according to the publishing time, resulting in the user being unable to see the target comment information.

In an embodiment, when a user adds a target song to a playlist, the address information of the playlist can also be obtained, and a jump link is generated based on the address information, so that the playlist can be associated with the target comment information via the jump link, other users will automatically jump to the homepage of the corresponding playlist when they click on the target comment information, as shown in FIG. 2, the purpose of users sharing their own playlists can be achieved in the comment area, which can greatly improve the efficiency of sharing playlists.

In an embodiment, the main interface of the playlist may include a user-defined playlist name, and may also include other descriptive information about the playlist. In addition, it can also include a heart-shaped control and a forward control, so that other users can collect the playlist through the heart-shaped control and forward the playlist through the forward control, the main page of the playlist can also be provided with a like control, so that other users can like the playlist through the like control, etc.

In an embodiment, in order to protect the user's privacy, when the user adds a song to a playlist, the user can choose to perform the adding in a public or private form. When a user forwards a song in a public manner, the target comment information can be automatically generated in the comment area in the above manner, or the user can generate the target comment information by manually inputting information. When a user chooses to add a song to a playlist in a non-public manner, generating target comment information in the comment area of the song is stopped. Specifically, users can select a red heart to indicate that songs are intended to be added to the playlist in a private manner, and users can select a non-red heart to indicate that songs are intended to be added to the playlist in a public manner.

In an embodiment provided by the present disclosure, a user can further delete the target comment information generated when the user loads the target song into the playlist, but the reply information by other users to the target comment information will not be deleted, and the previous reply information to the target comment information will be remained. In addition, if a user deletes a target song from the playlist, the comment information in the comment area corresponding to the target song will not be deleted, when other users click on the target comment information in the comment area, they will jump to the homepage of the playlist, after entering the homepage of the playlist, the words "This song has been removed from the playlist" will be prompted, last for three seconds, and then will disappear. It should be noted that a user can delete comments he/she posted in the comment area, but cannot delete the comments posted by other users in the comment area.

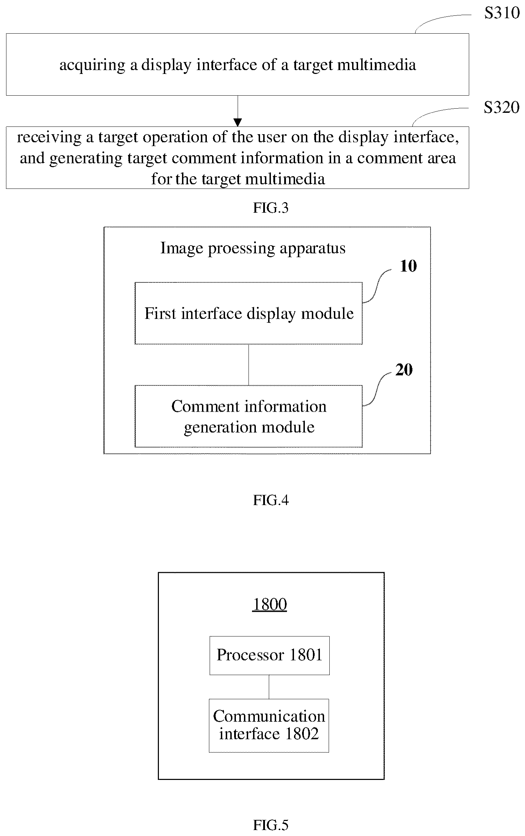

Based on the above embodiments, the present disclosure also provides an information processing method, as shown in FIG. 3 , the method includes the following steps:
Step S310: acquiring a display interface of a target multimedia.
Step S320, receiving a target operation of the user on the display interface, and generating target comment information in a comment area for the target multimedia. Among them, the target comment information includes information about a multimedia content set and a jump link to the multimedia content set.

In an embodiment, the multimedia may be audio or video, etc., wherein the display page of the target multimedia may be a playback page of a certain video or a playback page of a certain audio. There will be a comment area on the video or audio playback page, and the user's comment information will be displayed in the comment area.

On the display interface of the target multimedia, a target operation of the user on the display interface may be received, and the target operation may include performing a first operation for the comment area or performing a second operation for the multimedia content. The first operation may be that the user directly inputs information in the comment area, and the information may be published for generating target comment information in the comment area. The second operation may be that the user adds the target multimedia to the multimedia content set, or shares the target multimedia included in the multimedia content set.

For example, when a user sees his/her favorite target multimedia, such as his/her favorite video or music, the user can add the target multimedia to a target multimedia content set, which can be an audio/video content set created by the user on his/her own audio/video homepage, such as a video collection or a playlist, so that he/she can watch or listen to it conveniently. Similarly, the user can further share audio and/or video in the multimedia content set. Therefore, when a user adds a target multimedia to a target multimedia content set, target comment information can be generated in the comment area for the target multimedia, the target comment information carries a jump link to the multimedia content set, and other users can jump to a display page of the multimedia content set by clicking on the target comment information. In addition, the user can further share target multimedia in the multimedia content collection, when sharing the target multimedia, target comment information also can be generated in the comment area for the target multimedia, in this way, other users can jump to the display page of the multimedia content set by clicking on the target comment information, thereby achieving the purpose of quickly sharing the multimedia content set in the comment area.

In conjunction with the description in the above embodiments, illustration will be presented by taking the target multimedia being a song for example and the target multimedia content set being a playlist as an example. Among them, different songs can have corresponding display pages, and a song opened by the user or a user's favorite song can be used as target songs.

In an embodiment, a user may perform a target operation on the display interface of a target song, and the target operation may include inputting playlist information in a comment area or performing a trigger operation related to the target song. Among them, the performing the trigger operation related to the target song includes any one of the following: adding the target song to the playlist, liking the target song, sharing the target song, and viewing target songs shared by other users.

In the embodiment provided by the present disclosure, the user can input his/her own playlist information in the comment area for the song, such as name of the playlist and address of the playlist, so that the playlist information can be published as the target comment information. After having been published, the target comment information will carry a jump link to the playlist, so that other users can jump to the display page of the playlist by clicking on the target comment information or the like.

In an embodiment, target comment information may also be generated in the comment area for a target song when a user liking the song, sharing the song, or viewing songs shared by other users, the target comment information may be automatically generated by the system, or may be obtained by the user editing the input information and publishing it in the comment area for the song.

In addition, in an embodiment, when the user adds the target song to his/her playlist, the target comment information can be generated in the comment area for the target song, where the target comment information can be automatically generated, or the target comment information can be obtained by publishing user input information or by editing and publishing the automatically generated comment information.

In an embodiment, the method can be applied in an application software, which can be a music player software or a video player software, etc., and related songs can be playbacked through the application software. The user may be a user of the application software, and in an embodiment, the user may be an account formed by registering in the application software, relevant personal information in an embodiment is obtained only after giving the user an obvious prompt and obtaining the user's authorization and permission, including the collection, storage and usage of personal information, which meets relevant requirements of the Personal Information Protection Law.

In an embodiment, when it is detected that a user adds a target song to the user's playlist, target comment information is generated in a comment area for the target song. The target comment information may be automatically generated, for example, by a server or a terminal according to a predefined form, or may be generated according to relevant information input by a user, thereby realizing personalized generation of the target comment information. In addition, the target comment information represents that the user has added the target song to the playlist, the target comment information can be used to show other users the user's behavior of adding the song to the playlist, so that when other users click on the target comment information, they can enter a detail page of the user's playlist through the jump link to the playlist, thereby achieving the effect of users sharing playlists in the comment area, which can solve the problem that other users can only enter the playlist through text guidance, resulting in poor playlist sharing effect.

The information processing method provided by the embodiment of the present disclosure acquires a display interface of a target multimedia, receives a target operation of a user on the display interface, and generates target comment information in a comment area for the target multimedia, wherein the target comment information includes information about a multimedia content set and a jump link to the multimedia content set. Since the target comment information carries the jump link to the multimedia content set, when other users see the target comment information, they can jump to the display page of the multimedia content set by triggering the target comment information, in this way, users can quickly share the multimedia content set in the comment area, thereby greatly improving the sharing efficiency of the multimedia content set.

In an embodiment of the present disclosure, a jump link corresponding to the playlist will be associated in the generated target comment information, and when a trigger operation on the target comment information is received from the user, the display page of the playlist can be jumped to. The display page of the playlist in the embodiment may be the homepage of the playlist, or the detail page of the playlist, etc., for example, the playlist display page exemplarily shown in FIG. 2 .

Therefore, in an embodiment, when a user adds a favorite song to a playlist, a piece of comment information can be generated, the comment information can be used to show other users that the song has been added to the playlist, and the comment information is displayed in the comment area corresponding to the song, in this way, when other users listen to the song, they can jump to the detail page of the playlist by clicking on the comment information, thereby achieving the purpose of quickly and efficiently sharing the songs in the playlist.

It is understandable that the status of the playlist to which the user adds the song is public, not private; and the path to add the song to the playlist can be: the terminal receives the user's trigger operation to add the target song to the playlist, and in response to the trigger operation, adds the target song to its own playlist.

From the above description, it can be seen that in the embodiment of the present disclosure, the action of adding songs to the playlist is deposited in the comment area of the song, other users can directly jump to the display page of the corresponding playlist by clicking the comment information in the comment area, which is unlike the related art wherein it needs to guide other users to enter the user's homepage through text guidance to realize the sharing of songs in the playlist, thereby improving the efficiency of sharing songs in the playlist.

In an embodiment provided by the present disclosure, when the target operation is to add the target song to the playlist, the above step S320 may specifically include the following steps:
S321, acquiring user behavior descriptive information, wherein, the behavior descriptive information includes adding the target multimedia to the multimedia content set or sharing the target multimedia contained in the multimedia content set.
S322, generating target comment information based at least on the added behavior descriptive information and the multimedia content set information.

In an embodiment, illustration will be presented by taking the target multimedia being target music and the multimedia content set being a playlist as an example. In the embodiment, when the terminal receives a trigger operation of a user to add a song to a playlist, a piece of comment information can be automatically generated and be displayed in the comment area. Among them, the specific content of the comment information may include: adding action information + playlist information + user information. In addition, users can further share target multimedia in the multimedia content set, and when the target multimedia is shared, the target comment information also can be generated in the comment area for the target multimedia, in this way, other users can jump to the display page of the multimedia content collection by clicking on the target comment information, thereby achieving the purpose of quickly sharing the multimedia content set in the comment area. For details, please refer to the description of the above embodiments, which will not be repeated here. In the embodiment, target comment information can be quickly generated through a model based on a predetermined format, which can improve the efficiency of generating the comment information to a great extent.

In an embodiment, through acquiring the address information of the multimedia content set, a jump link to the multimedia content set may be generated based on the address information, and the jump link may be associated with the target comment information. Specifically, in the embodiment, illustration will be presented by taking the target multimedia being target music and the multimedia content set being a playlist as an example. By acquiring the address information of the playlist, a jump link to the playlist can be generated based on the address information, and the jump link can be associated with the target comment information. In an embodiment, when a user adds a target song to a playlist, the address information of the playlist can be further acquired, and a jump link can be generated based on the address information, by associating the jump link with the target comment information, other users, when clicking on the target comment information, will automatically jump to the homepage of the corresponding playlist, as shown in FIG. 2, in turn, a purpose of users sharing their own playlists can be achieved in the comment area, which can greatly improve the efficiency of sharing playlists.

Based on the above embodiments, in an embodiment provided by the present disclosure, the method may further include the following steps:
S323, acquiring the user's target input information.
S324, editing the target comment information based at least on the target input information.

In an embodiment, illustration will be presented by taking the target multimedia being target music and the multimedia content set being a playlist as an example. In the embodiment, on the basis of automatically generating target comment information as mentioned above, the automatically generated target comment information can be edited according to the user's target input information, and the edited comment information can be used as the target comment information, so as to facilitate the display of the user's input requirements for diversified or personalized comment information.

In addition, after having added the song to the playlist, the terminal may also receive input information input by the user in the comment area, and after having received the input information input by the user, the terminal may generate target comment information based on the input information in the comment area. Among them, in the process of generating the target comment information in the comment area for the target song according to the user's input information in a personalized manner, based on the user's input information, the input information can be combined with the user information and the playlist information as the target comment information to be published in the target comment area. For details, please refer to the description of the above embodiments, which will not be repeated here.

Based on the above embodiments, in the embodiments provided by the present disclosure, the method may further include the following steps:
Step S330, acquiring a display page of the user's comment area. Among them, the display page of the comment area may include at least one piece of comment information.
Step S340, displaying the target comment information at the top of the display page of the comment area within a preset time period.

In an embodiment, after the target comment information has been published, before the user logs in next time, the target comment information can be pinned to the top of the display page of the user's comment area so as to avoid a situation where, after the target comment has been published, since there are too many comments in the comment area, the target comment information is displayed at the end of all the comment information when the comment information in the comment area is displayed according to the publishing time, resulting in the user being unable to see the target comment information, and to improve the experience of generating the target comment information.

In an embodiment of the present disclosure, the display page of the comment area is shown in FIG. 1, and may include a user nickname, a user character, and comment information, etc., in addition to the comment information generated by the above two implementation manners, the comment information may also include other comment information, the other comment information mentioned here may be other comment information posted by the user himself, as well as comment information posted by other users, which is all reasonable. Upon receiving a click trigger operation on "Add song to playlist [playlist name ***]" in FIG. 1, the terminal causes the display page to jump from the comment area to the detail page of user's playlist. Furthermore, when the terminal receives the user's own viewing trigger operation on the song, the terminal can display the comment information "Add song to playlist [playlist name ***]" at the front position in the comment area, for example, at the top of the comment area.

The schematic diagram of the playlist detail page is shown in FIG. 2 , which may include all songs included in the playlist, such as song 1, song 2, song 3, and song 4.

Based on the above embodiments, in an embodiment provided by the present disclosure, the method may further include the following steps:
Step S350: receiving the user's reply information to the target comment information.

In the embodiment, the user may be the user who posted the target comment information, or may be another user.

Step S360: associating the reply information with the target comment information.

Step S370: upon receiving a deletion operation of the user for the target comment information, deleting the target comment information, and retaining the reply information.

In an embodiment, when the terminal receives a long press trigger operation of the user himself/herself for the target comment information, a reply control, a delete control or the like can be displayed; when the user himself/herself clicks on the reply control, the reply information entered by the user himself/herself can be received and displayed; when the user himself/herself clicks on the delete control, the target comment information "Add song to playlist [playlist name ***]" can be deleted.

For example, when the terminal receives a long press trigger operation of other users for the target comment information, a reply control or the like can be displayed. When receiving the reply control being click by other users, reply information input by other users can be received and displayed.

In an embodiment, when a deletion operation of the user himself/herself for target comment information is received, the target comment information may be deleted, while reply information to the target comment information may be retained. This can avoid deleting all reply information related to the target comment information due to the user deleting the target comment information, and by retaining the reply information, the richness of the comment area can be improved.

Based on the above embodiments, in an embodiments provided by the present disclosure, the method may further include the following steps:
Step S381, receiving a user's triggering operation on target comment information.
Step S382: when it is detected that the target multimedia is removed from the multimedia content set, jumping to the display page of the multimedia content set.
Step S383: display prompt information of the target multimedia on the display page of the multimedia content set. Among them, the prompt information indicates that the target multimedia has been removed from the multimedia content set.

In an embodiment, illustration will be presented by taking the target multimedia being a song for example and the target multimedia content set being a playlist as an example. In an embodiment, when the terminal receives that the user has deleted a song from a playlist, the target song will be removed from the playlist, but the target comment information may not be removed, when the terminal receives a click trigger operation of other users for the target comment information, it can jump from the display page of the comment area to the display page of the playlist, and display a prompt message that "the song has been removed from the playlist", and the prompt message will be deleted after a preset time period. For example, the preset time period may be 3 seconds. In this way, even if the user himself/herself deletes the song from the playlist, the songs in the playlist can be shared quickly and efficiently through the comment information, which can improve the efficiency of sharing the songs in the playlist.

In the case of dividing functional modules according to respective functions, an embodiment of the present disclosure provides an information processing apparatus, which may be a server or a chip applied to a server. FIG. 4 is a schematic block diagram of functional modules of an information processing apparatus provided by an exemplary embodiment of the present disclosure.

As shown in FIG. 4, the information processing apparatus includes:
a first interface display module 10, configured to acquire a display interface of a target multimedia; and
a comment information generation module 20, configured to receive a target operation of a user on the display interface, and generate target comment information in a comment area for the target multimedia, wherein the target comment information includes information about a multimedia content set and a jump link to the multimedia content set.

Optionally, the target operation may include inputting the information about the multimedia content set in the comment area or performing a trigger operation related to the target multimedia .

Optionally, the target operation may include performing a first operation for the comment area or performing a second operation for the multimedia content.

Optionally, the apparatus may further include:
a page jump module, configured to jump to a display page of the multimedia content set upon receipt of a trigger operation of the user for the target comment information.

Optionally, the performing the second operation for the multimedia content may include:
adding the target multimedia to the multimedia content set, or sharing the target multimedia included in the multimedia content set.

Optionally, when the target operation is adding the target multimedia to the multimedia content set, the comment information generation module may be further configured to:
acquire behavior descriptive information of the user; the behavior descriptive information includes adding the target multimedia to the multimedia content set or sharing the target multimedia;
generating the target comment information based at least on the song adding behavior descriptive information and the information about the multimedia content set.

Optionally, the apparatus may further include:
an information input module, configured to acquire target input information of the user;
an information editing module, configured to edit the target comment information based at least on the target input information.

Optionally, the apparatus may further include:
an address acquisition module, configured to acquire address information of the multimedia content set;
an address association module, configured to generate a jump link to the multimedia content set based on the address information, and associate the jump link with the target comment information.

Optionally, the apparatus may further include:
a second page display module, configured to acquire a display page of the comment area for the user, wherein the display page of the comment area includes at least one piece of comment information;
a top display module, configured to display the target comment information at the top of the display page of the comment area within a preset time period.

Optionally, the apparatus may further include:
an information receiving module, configured to receive a user's reply information to the target comment information;
a comment information association module, configured to associate the reply information with the target comment information;
a deletion module, configured to delete the target comment information and retain the reply information, upon receipt of a deletion operation of the user for the target comment information.

Optionally, the apparatus may further include:
a trigger operation receiving module, configured to receive a user's trigger operation for the target comment information;
a page jump module, configured to jump to a display page of the multimedia content set, when it is detected that the target multimedia is removed from the multimedia content set;
a song removal module, configured to display prompt information of the target multimedia on the display page of the multimedia content set, wherein the prompt information indicates that the target multimedia has been removed from the multimedia content set.

For parts of the apparatus, please refer to the description in the above corresponding embodiments, which will not be repeated here.

In particular, the information processing apparatus provided by the embodiments of the present disclosure can execute the information processing method provided by any embodiment of the present disclosure, has corresponding modules/units for executing the method, and obtains beneficial effects. It shall note that the various units and/or modules included in the above-mentioned apparatus are only divided according to functional logic, but are not limited to the above-mentioned division, as long as the corresponding functions can be achieved; in addition, specific names of the units are only for the convenience of distinguishing from each other, instead of being used to limit the protection scopes of the embodiments of the present disclosure. Furthermore, each unit may be implemented in various appropriate ways, such as software, firmware, hardware, or any appropriate combination.

The information processing apparatus provided by the embodiment of the present disclosure acquires a display interface of a target multimedia, receives a target operation of a user on the display interface, and generates target comment information in a comment area for the target multimedia, wherein the target comment information includes information about a multimedia content set and a jump link to the multimedia content set. Since the target comment information carries the jump link to the multimedia content set, when other users see the target comment information, they can jump to the display page of the multimedia content set by triggering the target comment information, in this way, users can quickly share the multimedia content set in the comment area, thereby greatly improving the sharing efficiency of the multimedia content set.

An embodiment of the present disclosure also provides an electronic device, including: at least one processor; and a memory for storing instructions executable by the at least one processor; wherein the at least one processor is configured to execute the instructions to implement the above method disclosed in the embodiments of the present disclosure.

FIG. 5 illustrates a structural schematic diagram of an electronic device provided by an embodiment of the present disclosure. As shown in FIG. 5, an electronic device 1800 may include at least one processor 1801 and a storage device 1802 coupled to the processor 1801, wherein the processor 1801 can execute corresponding steps in the methods disclosed in embodiments of the present disclosure.

The processor 1801 may also be referred to as a central processing unit (CPU), which may be an integrated circuit chip having signal processing capabilities. Each step in the above method disclosed in the embodiment of the present disclosure can be completed by an integrated logic circuit of hardware or instructions in software form in the processor 1801. The processor 1801 mentioned above can be a general-purpose processor, a digital signal processor (DSP), an ASIC, a field-programmable gate array (FPGA) or other programmable logic devices, discrete gate or transistor logic devices, discrete hardware components. A general purpose processor may be a microprocessor, or the processor may be any conventional processor or the like. The steps of the method disclosed in the embodiments of the present disclosure may be directly implemented as being executed by a hardware decoding processor, or may be implemented as being executed by a combination of hardware and software modules in the decoding processor. The software module may be located in the memory 1802, such as a random access memory, a flash memory, a read-only memory, a programmable read-only memory, or an electrically erasable programmable memory, a register, or other mature storage media in the art. The processor 1801 reads the information in the memory 1802 and completes the steps of the above method in combination with its hardware.

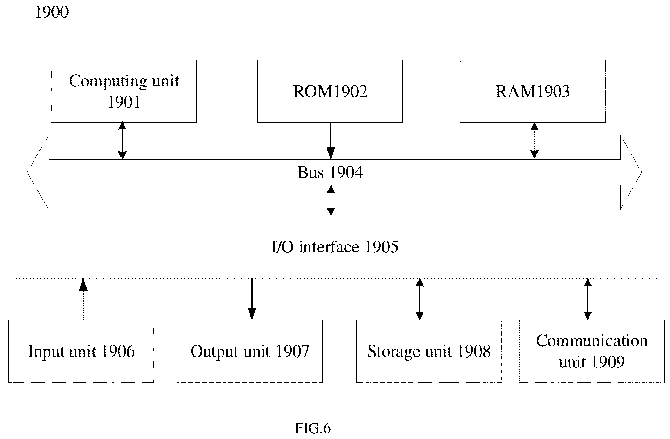

In addition, when various operations/processing according to the present disclosure are implemented by software and/or firmware, the programs constituting the software can be installed from a storage medium or a network to a computer system with a dedicated hardware structure, such as the computer system 1900 shown in FIG. 6, the computer system, when being installed various programs, can perform various functions, including the functions described above and so on. FIG. 6 is a structural block diagram of a computer system provided by an exemplary embodiment of the present disclosure.

Computer system 1900 is intended to represent various forms of digital electronic computer devices, such as laptop computers, desktop computers, workstations, personal digital assistants, servers, blade servers, mainframe computers, and other appropriate computers. Electronic devices may also refer to various forms of mobile devices, such as personal digital assistants, cellular phones, smart phones, wearable devices, and other similar computing devices. The components, their connections and relationships, and their functions shown herein are illustrated only as examples, and are not meant to limit implementations of the disclosure described and/or claimed herein.

As shown in FIG. 6, the computer system 1900 includes a computing unit 1901, which can perform various appropriate actions and processes according to a computer program stored in a read-only memory (ROM) 1902 or a computer program loaded from a storage unit 1908 to a random access memory (RAM) 1903. In the RAM 1903 , various programs and data necessary for the operation of the computer system 1900 may also be stored. The calculation unit 1901 , the ROM 1902 , and the RAM 1903 are connected to one another via a bus 1904. An input/output (I/O) interface 1905 is also connected to the bus 1904 .

Multiple components in the computer system 1900, including an input unit 1906 , an output unit 1907 , a storage unit 1908 , and a communication unit 1909, are connected to the I/O interface 1905. The input unit 1906 may be any type of device capable of inputting information to the computer system 1900 , and the input unit 1906 may receive input numeric or character information, and generate key signal input related to user setting and/or function control of the electronic device. Output unit 1907 may be any type of device capable of presenting information, and may include, but is not limited to, a display, a speaker, a video/audio output terminal, a vibrator, and/or a printer. The storage unit 1908 may include, but is not limited to, a magnetic disk and an optical disk. The communication unit 1909 allows the computer system 1900 to exchange information/data with other devices over a network such as the Internet, and may include, but is not limited to, a modem, a network card, an infrared communication device, a wireless communication transceiver and/or a chipset, such as a Bluetooth^{™} device, a WiFi device, a WiMax device, a cellular communication device and/or the like.

The computing unit 1901 may be a variety of general and/or special processing components having processing and computing capabilities. Some examples of computing unit 1901 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1901 executes the various methods and processes described above. For example, in some embodiments, the above methods disclosed in the embodiments of the present disclosure may be implemented as a computer software program, which is tangibly contained in a machine-readable medium, such as the storage unit 1908. In some embodiments, part or all of the computer program may be loaded and/or installed on the electronic device 1900 via the ROM 1902 and/or the communication unit 1909. In some embodiments, the computing unit 1901 may be configured to execute the above methods disclosed in the embodiments of the present disclosure in any other appropriate manner (for example, by means of firmware).

An embodiment of the present disclosure further provides a computer-readable storage medium, wherein when instructions in the computer-readable storage medium are executed by a processor of an electronic device, the electronic device is enabled to execute the above methods disclosed in the embodiments of the present disclosure.

The computer-readable storage medium in the embodiments of the present disclosure may be a tangible medium that may contain or store a program for use by an instruction execution system, apparatus, or device or for use in conjunction with an instruction execution system, apparatus, or device. The computer-readable storage medium may include, but are not limited to, electronic, magnetic, optical, electromagnetic, infrared, or semiconductor systems, apparatuses, or devices, or any suitable combination of the foregoing. More specifically, the above-mentioned computer-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above contents.

The computer-readable medium may be included in the electronic device, or may exist independently without being installed in the electronic device.

The embodiments of the present disclosure further provide a computer program product, including a computer program, wherein when the computer program is executed by a processor, the above methods disclosed in the embodiments of the present disclosure is implemented.

In the embodiments of the present disclosure, computer program codes for performing the operations of the present disclosure may be written in one or more programming languages or a combination thereof, and the programming languages include but are not limited to object-oriented programming languages such as Java, Smalltalk, C++, and conventional procedural programming languages such as "C" language or similar programming languages. The program code may execute entirely on the user's computer, partly on the user's computer, as a stand-alone software package, partly on the user's computer and partly on a remote computer, or entirely on the remote computer or server. Where a remote computer is involved, the remote computer may be connected to the user's computer through any type of network, including a Local Area Network (LAN) or a Wide Area Network (WAN), or may be connected to an external computer.

The flowcharts and block diagrams in the accompanying drawings illustrate possible implementation architectures, functions, and operations of systems, methods, and computer program products according to various embodiments of the present disclosure. In this regard, each block in the flowchart or block diagram may represent a module, a program segment, or a part of codes, which contains one or more executable instructions for implementing the specified logical functions. It should also be noted that, in some alternative implementations, the functions noted in the block may occur out of the order noted in the figures. For example, two blocks shown in succession may actually be executed substantially in parallel, or they may sometimes be executed in the reverse order, depending on the functionality involved. It should also be noted that each box in the block diagram and/or flowchart, and combinations of boxes in the block diagram and/or flowchart, can be implemented by a dedicated hardware-based system that performs the specified function or operation, or can be implemented by a combination of dedicated hardware and computer instructions.

The modules, components or units involved in the embodiments described in the present disclosure may be implemented by software or by hardware. Among them, in some cases, the name of a module, component or unit does not constitute a limitation on the module, component or unit itself.

The functions described above herein may be performed at least in part by one or more hardware logic components. For example, without limitation, exemplary hardware logic components that may be used include: field programmable gate arrays (FPGAs), application specific integrated circuits (ASICs), application specific standard products (ASSPs), systems on chips (SOCs), complex programmable logic devices (CPLDs), and the like.

The above descriptions are merely some embodiments of the present disclosure and illustrations of the technical principles employed. Those skilled in the art should understand that the disclosure scopes involved in the present disclosure is not limited to the technical solutions formed by specific combinations of the above-mentioned technical features, but should also cover other technical solutions formed by any combination of the above-mentioned technical features or their equivalent features without departing from the above-mentioned disclosure concepts. For example, technical solutions formed by exchanging the above-mentioned features with technical features with similar functions that are disclosed in (but not limited to) this disclosure.

Although some specific embodiments of the present disclosure have been described in detail through examples, those skilled in the art should understand that the above examples are only for illustration rather than for limiting the scope of the present disclosure. It will be appreciated by those skilled in the art that modifications may be made to the above embodiments without departing from the scope and spirit of the present disclosure. The scope of the present disclosure can be defined by the appended claims.

## Claims

1. An information processing method, comprising:
acquiring a display interface of a target multimedia; and
receiving a target operation of a user on the display interface, and generating target comment information in a comment area for the target multimedia, wherein the target comment information includes information about a multimedia content set and a jump link to the multimedia content set.

2. The method according to claim 1, wherein, the target operation comprises performing a first operation for the comment area or performing a second operation for the multimedia content.

3. The method according to claim 1 or 2, further comprising:
jumping to a display page of the multimedia content set, upon receipt of a trigger operation of the user for the target comment information.

4. The method according to claim 2, wherein, the performing the second operation for the multimedia content comprises:
adding the target multimedia to the multimedia content set, or sharing the target multimedia included in the multimedia content set.

5. The method according to claim 4, wherein, the generating target comment information in the comment area for the target multimedia comprises:
acquiring behavior descriptive information of the user; wherein the behavior descriptive information comprises adding the target multimedia to the multimedia content set or sharing the target multimedia contained in the multimedia content set;
generating the target comment information based at least on the behavior descriptive information and the information about the multimedia content set.

6. The method according to claim 5, further comprising:
acquiring target input information of the user;
editing the target comment information based at least on the target input information.

7. The method according to claim 1, further comprising:
acquiring address information of the multimedia content set;
generating a jump link to the multimedia content set based on the address information, and associating the jump link with the target comment information.

8. The method according to claim 1, further comprising:
acquiring a display page of the comment area for the user, wherein the display page of the comment area comprises at least one piece of comment information;
displaying the target comment information at the top of the display page of the comment area within a preset time period.

9. The method according to claim 1, further comprising:
receiving a user's reply information to the target comment information;
associating the reply information with the target comment information;
deleting the target comment information and retaining the reply information, upon receipt of a deletion operation of the user for the target comment information.

10. The method according to claim 1, further comprising:
receiving a user's trigger operation for the target comment information;
jumping to a display page of the multimedia content set, when it is detected that the target multimedia is removed from the multimedia content set;
displaying prompt information of the target multimedia on the display page of the multimedia content set, wherein the prompt information indicates that the target multimedia has been removed from the multimedia content set.

11. The method according to any one of claims 1-10, wherein the target operation comprises inputting the information about the multimedia content set in the comment area, or performing a trigger operation related to the target multimedia.

12. An information processing apparatus, comprising:
a first interface display module, configured to acquire a display interface of a target multimedia; and
a comment information generation module, configured to receive a target operation of a user on the display interface, and generate target comment information in a comment area for the target multimedia, wherein the target comment information includes information about a multimedia content set and a jump link to the multimedia content set.

13. The information processing apparatus according to claim 12, wherein, the apparatus further comprises:
a page jump module, configured to jump to a display page of the multimedia content set upon receipt of a trigger operation of the user for the target comment information.

14. The information processing apparatus according to claim 12, wherein, when the target operation is adding the target multimedia to the multimedia content set, the comment information generation module is further configured to:
acquire behavior descriptive information of the user; wherein the behavior descriptive information comprises adding the target multimedia to the multimedia content set or sharing the target multimedia;
generate the target comment information based at least on song adding behavior descriptive information and the information about the multimedia content set.

15. The information processing apparatus according to claim 12, wherein, the apparatus further comprises:
an information input module, configured to acquire target input information of the user;
an information editing module, configured to edit the target comment information based at least on the target input information.

16. The information processing apparatus according to claim 12, wherein, the apparatus further comprises:
an address acquisition module, configured to acquire address information of the multimedia content set;
an address association module, configured to generate a jump link to the multimedia content set based on the address information, and associate the jump link with the target comment information.

17. The information processing apparatus according to claim 12, wherein, the apparatus further comprises:
a second page display module, configured to acquire a display page of the comment area for the user, wherein the display page of the comment area comprises at least one piece of comment information;
a top display module, configured to display the target comment information at the top of the display page of the comment area within a preset time period.

18. The information processing apparatus according to claim 12, wherein, the apparatus further comprises:
an information receiving module, configured to receive a user's reply information to the target comment information;
a comment information association module, configured to associate the reply information with the target comment information;
a deletion module, configured to delete the target comment information and retain the reply information, upon receipt of a deletion operation of the user for the target comment information.

19. The information processing apparatus according to claim 12, wherein, the apparatus further comprises:
a trigger operation receiving module, configured to receive a user's trigger operation for the target comment information;
a page jump module, configured to jump to a display page of the multimedia content set, when it is detected that the target multimedia is removed from the multimedia content set;
a song removal module, configured to display prompt information of the target multimedia on the display page of the multimedia content set, wherein the prompt information indicates that the target multimedia has been removed from the multimedia content set.

20. An electronic device, comprising:
one or more processors;
a memory for storing instructions executable by the one or more processors;
wherein the one or more processors are configured to execute the instructions to implement the method according to any one of claims 1 to 11.

21. A computer-readable storage medium, wherein instructions in the computer-readable storage medium, when executed by a processor of an electronic device, causes the method according to any one of claims 1 to **11** to be implemented.

22. A computer program product comprising instructions which, when executed by a processor, cause the method according to any one of claims 1 to 11 to be implemented.

23. A computer program comprising program codes, which, when executed by a processor, cause the method according to any one of claims 1 to 11 to be implemented.
